Europäisches Patentamt

European Patent Office

Office européen des brevets

(11) Publication number: **0 048 950**
A1

# EUROPEAN PATENT APPLICATION

(21) Application number: 81107569.6

(22) Date of filing: 23.09.81

(51) Int. Cl.³: **C 09 J 7/02**, C 08 F 236/04, C 08 F 220/12 // (C08F236/04, 220/12),(C08F220/12, 236/04)

(30) Priority: 26.09.80 JP 132789/80

(43) Date of publication of application: 07.04.82
Bulletin 82/14

(84) Designated Contracting States: AT BE CH DE FR GB IT LI LU NL SE

(71) Applicant: ASAHI-DOW LIMITED, Hibiya-Mitsui Building 1-2, Yurakucho 1-chome Chiyoda-ku, Tokyo 100 (JP)

(72) Inventor: Shinohara, Tsunehisa, 858-55, Terabun, Kamakura City Kanagawa Prefecture (JP)
Inventor: Shimada, Toyohiro Asahi-Dow Shinjo Dormitory, 181, Kami-Odanaka Nakahara-Ku, Kawasaki City Kanagawa Prefecture (JP)
Inventor: Sugiyama, Akira, Room No. 624 DIK Ohfuna, 62-19, Okamoto-Cho, Kamakura City Kanagawa Prefecture (JP)

(74) Representative: Casalonga, Axel et al, Bureau D.A. Casalonga Lillenstrasse 77, D-8000 München 80 (DE)

(54) Latex copolymers for pressure-sensitive adhesives and pressure-sensitive adhesive article comprising them.

(57) A latex made from a conjugated diene such as 1,3-butadiene and an alkyl ester of an ethylenically unsaturated carboxylic acid such as butyl acrylate is thickened with conventional thickening agents and used as a pressure-sensitive adhesive. The latex exhibits excellent tack, shear adhesion and peel adhesion even without the use of added tackifiers.

EP 0 048 950 A1

LATEX COPOLYMERS FOR PRESSURE-SENSITIVE ADHESIVES
AND PRESSURE-SENSITIVE ADHESIVE
ARTICLE COMPRISING THEM

Pressure-sensitive adhesives are used widely for paper, cellophane, plastic and similar self-adhesive tapes for packaging, masking and other purposes, and for various labels and stickers. Latexes useful as pressure-sensitive adhesives are generally of either a rubber-type latex, or an acrylate latex. The rubber latex pressure-sensitive adhesives generally are made from natural or synthetic rubber, a tackifier resin and a softening agent such as mineral oil, liquid polybutene, liquid polyacrylate and the like. A tackifier resin is used with the rubber latex because a pressure--sensitive adhesive lacking a tackifier will generally have insufficient tack (stickiness under light pressure) to be commercially useful. Tackifier resins are normally solids, and are added to the rubber latex in the form of a solution or a nonaqueous emulsion. In these

29,718-F

methods, however, the solvent employed is detrimental to the adhesive characteristics of the latex. In an alternative method, the tackifier resin is pulverized and then added to the rubber latex. But this manufacturing process requires great expenditures of time and energy, and renders it difficult to obtain a latex having sufficient stability.

Conventional acrylic latexes used in pressure-sensitive adhesives are generally made from alkyl esters of acrylic acid having 4 to 10 carbon atoms in the alkyl group. These latexes develop offensive odors from residual alkyl acrylate monomers, and are relatively expensive to manufacture. In addition, their water resistance is insufficient for application in humid or water-contacting places.

In view of the foregoing, it would be desirable to have a latex suitable for use in a pressure-sensitive adhesive, which is capable of use with or without minimal amounts of tackifier resins, and simultaneously has excellent tack and water resistance.

In one aspect, the invention is a latex comprising 5-80 percent of a conjugated diene and 3-80 percent of an alkyl ester of an unsaturated carboxylic

29,718-F

acid. In another aspect, the invention is a latex having a conjugated diene and an alkyl ester of an unsaturated carboxylic acid present in such proportions that the latex, when thickened and applied to a paper substrate, has a shear adhesion of at least about 300 sec. and a peel adhesion of at least about 250 g/2.5 cm. In yet another aspect, the invention is a pressure-sensitive adhesive article which is a substrate bearing a coating of the latex of the invention.

Surprisingly, the latexes of the invention exhibit excellent combinations of dry tack, peel adhesion, shear adhesion water resistance and heat resistance.

One component of the latexes of the instant invention is a conjugated diene monomer. Conjugated diene monomers useful in the practice of the invention include those conventionally employed in known emulsion polymerization processes. Typically, such aliphatic conjugated dienes contain from 4 to 9 carbon atoms. Examples of such monomers include 1,3-butadiene, 2-methyl-1,3-butadiene, 2,3-dimethyl-1,3-butadiene, 2-neopentyl-1,3-butadiene and other hydrocarbon analogs of 1,3-butadiene. In addition, examples include substituted 1,3-butadienes such as 2-chloro-1,3-butadiene, 2-cyano-1,3-butadiene; the substituted straight chain conjugated pentadienes such as 1,3-pentadiene; the straight chain and branched chain conjugated hexadienes; other straight chain and branched chain conjugated dienes having from 4 to 9 carbon atoms and comonomeric mixtures thereof.

The 1,3-butadiene hydro-carbon monomers provide polymers having particularly desirable properties and are therefore preferred. The low cost,

29,718-F

0048950

relative availability and excellent properties of copolymers produced therefrom make 1,3-butadiene the most preferred aliphatic conjugated diene for use in the instant invention.

The practice of the invention also requires the use of an alkyl ester of an ethylenically unsaturated carboxylic acid. Generally, such monomers will be $C_1$ to $C_{12}$ alkyl esters of acrylic or methacrylic acid. Typical examples of the alkyl acrylates and methacrylates suitable for use in the present invention include methyl acrylate, methyl methacrylate, ethyl acrylate, ethyl methacrylate, hexyl acrylate, and hexyl methacrylate. Monomers such as ethyl acrylate, isbutyl acrylate, n-butyl acrylate, 2-ethylhexyl acrylate and lauryl methacrylate, are preferred because of their relatively low glass transition temperature.

Although optional, it is preferred that the conjugated diene and alkyl ester be copolymerized with at least one other ethylenically unsaturated monomer which is copolymerizable therewith. Such monomers include vinyl aromatic compounds such as styrene, vinyltoluene, alpha-methylstyrene and divinylbenzene; ethylenically unsaturated carboxylic acids such as acrylic acid, methacrylic acid and itaconic acid; hydroxyalkyl esters such as beta-hydroxyethyl acrylate; acrylonitrile; vinyl compounds having a glycidyl group such as glycidyl methacrylate and glycidyl acrylate; compounds having an amide group such as acrylamide and N-methylacrylamide; and vinyl esters such as vinyl acetate and vinyl propionate. Of these various monomers, it is preferred to use styrene and/or an

29,718-F

ethylenically unsaturated carboxylic acid, because of the higher cohesiveness they contribute to the resulting latex. In particular, it is preferred to add at least 2 percent of an ethylenically unsaturated carboxylic acid, in order to add colloidal stability and cohesiveness to the latex.

The relative proportions of the conjugated diene monomer and the alkyl acrylate monomer may be widely varied, and are dictated by the range of properties suitable for a particular end use. Generally, the conjugated diene and alkyl acrylate are added in a ratio such that the resulting latex simultaneously possesses good dry tack, good peel adhesion and good shear adhesion.

Desirably, the thickened latexes have a shear adhesion of at least 300 sec. and a peel adhesion of at least 250 g/2.5 cm. More desirably, they have a shear adhesion of at least 500 sec. and a peel adhesion of at least 250 g/2.5 cm. Still more desirably, they have a shear adhesion of at least 800 sec. and a peel adhesion of at least 400 g/2.5 cm. Preferably, they have a shear adhesion of at least 1000 sec. and a peel adhesion of at least 700 g/2.5 cm. Most preferably, they have a shear adhesion of at least 2000 sec. and a peel adhesion of at least 1000 g/2.5 cm. The dry tack is desirably at least 6, more desirably at least 7, preferably at least 8 and most preferably at least 9.

29,718-F

0048950

Desirably, the copolymer latex contains from 5 to 80 percent conjugated diene and from 3 to 80 percent alkyl ester. Preferably, the copolymer latexes contain from 10 to 60 percent conjugated diene and from 5 to 60 percent alkyl ester. The other copolymerizable monomers are desirably present in quantities of 0 to 50 percent. Preferably, they are present at from 2 to 45 percent. Further, it is preferred that at least a portion of the other monomers be an ethylenically unsaturated carboxylic acid.

If the copolymer latexes contain an insufficient quantity of conjugated diene (usually less than about 5 percent), the latex will have insufficient tack. This can be somewhat offset by lowering the molecular weight of the copolymer. However, this results in a significant reduction in the cohesive strength and water resistance of the latex. On the other hand, if the butadiene content is too high (usually greater than about 80 percent) the latex will have a lowered heat resistance. If the quantity of alkyl ester is insufficient (usually less than about 3 percent) or too great (usually greater than about 80 percent) there will be an imbalance between the tack and the adhesive strength of the latex. Further, excess alkyl ester may result in a strong offensive odor.

29,718-F

The copolymer latexes may be polymerized by any well-known, emulsion-polymerization process. Suitable emulsifiers include anionic emulsifiers such as sodium dodecylbenzenesulfonate, sodium laurylsulfate, sodium dioctyl sulfosuccinate and disodium dodecyldiphenylethersulfonate; and nonionic emulsifiers such as polyoxyethylene alkyl ether and polyoxyethylene alkylphenol ether. Suitable polymerization initiators include any conventional free radical catalyst which may be employed in an emulsion polymerization.

The polymerization process may include the use of chain transfer agents such as carbon tetrachloride and t-dodecyl mercaptan. The quantity of chain transfer agent used is determined according to the level of tack desired to be imparted to the finished latex. In general, more chain transfer agent should be added to the polymerization than would be added in ordinary emulsion polymerizations. However, the use of excessive chain transfer agents is undesirable because it will have an adverse effect on the latex adhesive strength.

Additional additives include electrolytes, chelating agents, buffering agents, pH adjusters and other additives as desired when needed. These additives, including the aforementioned emulsifiers, initiators and chain transfer agents may be added in their entirety to the monomers before polymerization or some of them may be added to the monomer before polymerization with the remainder being added to the reactor during polymerization. Alternatively, all of the other ingredients may be added continuously or discontinuously to the reactor during polymerization.

Preferably, the latexes of the instant invention are combined with a thickening agent prior to use as a pressure-sensitive adhesive. Suitable thickening agents include cellulose derivatives such as carboxy methylcellulose and methylcellulose, polyvinyl alcohol, sodium polyacrylate, alkali-soluble latexes, and the like. The thickening agents are added to the latex in sufficient quantity to give the latex a suitable working viscosity, generally about 10,000 cps (10 PaS). The adhesive compositions may also contain, as required for particular end uses, tackifier resins; plasticizing agents; softening agents such as polybutene, lanolin and process oil; fillers such as zinc oxide, titanium dioxide and calcium carbonate; antioxidants; and stabilizers.

The invention is further illustrated by the following examples and accompanying comparative examples. In the examples, all parts are by weight, unless otherwise specified.

Examples 1-5

To a temperature-controllable, pressure reactor purged with nitrogen and equipped with a stirrer, 100 parts water, 1.2 parts sodium dodecyl-benzylsulfonate, 0.08 part sodium ethylenediaminetetraacetate, 1.2 parts potassium persulfate, 0.2 part sodium hydroxide, 100 parts of a monomer mixture

29,718-F

0048950

consisting of 45 parts butadiene, 15 parts butyl acrylate, 38 parts styrene and 2 parts acrylic acid, and 1.8 parts tert-dodecyl mercaptan was added. The mixture was maintained at 60°-70°C for 20 hours. After completion of the polymerization, the pH of the resulting latex was adjusted with sodium hydroxide to about 7, and the latex steam stripped to remove residual monomers. Similarly, this procedure was repeated except for varying the formulation of the monomer mixture and the quantity of tert-dodecyl mercaptan as indicated in Table I.

To all latex samples a small amount of partially saponified polyvinyl alcohol was added such that the viscosity of the latex reached about 10,000 cps. (10 PaS) as measured at 20°C, with a BH viscometer, No. 7 spindle, 20 rpm. The resulting thickened latex was applied onto release paper sheets at a rate of about 30 grams per square meter, and is dried at 120°C for about 2 minutes. Fine paper sheets were then placed onto the coated side of the release paper and pressure was applied to transfer the adhesive to the high quality paper. The paper to which the adhesive was applied was then subjected to physical tests and the results are shown in Table II.

Comparative Examples C1-C4

Following the same procedure as in Examples 1-5, several comparative adhesive compositions were made and evaluated in the same manner as the adhesives of Examples 1-5. These results are reported in Tables I and II.

29,718-F

Also the physical tests performed on the Examples and Comparative Examples were repeated on identically prepared specimens of several commercially available acrylic latex adhesives and a rubber-insolvent adhesive. These results are shown in Table II.

### Dry Tack

Dry tack was measured by a rolling ball method which in Japan is generally referred to as the "J-DOW" method. It is performed according to Japanese Industrial Standard (JIS) Z0237 (1980). A paper specimen coated with the adhesive is fixed in the middle of a 30° slope and a stainless steel ball having a diameter of X/32 inches (0.79X mm) is placed into a gate on the upper side of the slope, 10 cm from the specimen. When the gate is opened, the ball rolls down the slope to the adhesive. Large balls will roll through the adhesive but small ones will be stuck. The results are reported as the value of X where X/32 inches (0.79X mm) is the diameter of the largest ball which will not roll past the adhesive.

### Shear Adhesion (0°)

Shear adhesion (cohesive strength) is performed according to JIS Z0237. The coated surfaces of 2 paper specimens are stuck together over a 2 cm x 2 cm area under a pressure of 2 kg/cm² and hung up in a 40°C atmosphere. The upper end of one specimen is securely

29,718-F

fastened to a support and the lower end of the other specimen is fastened to a 1 kg weight. The results are reported as the time in seconds until the samples separate.

Peel Adhesion (180°)

Peel adhesion (adhesive strength) is performed in a manner similar to JIS Z0237. Adhesive strength is measured by applying a coated paper specimen onto a stainless steel plate surface under a uniform pressure of 2 kg/cm², and pulling one end back towards the opposite end along the plate surface. The results are recorded as the force required to peel the specimen off the plate at a rate of 300 mm per minute.

Water Resistance

Water was dropped onto the coated surface of the specimen, and left to stand for 10 minutes. The results are reported as the degree of peeling of the adhesive layer.

Heat Resistance

The paper specimen is heated for 30 minutes in a 150°C oven. The results are recorded as the extent of yellowing visually observed.

29,718-F

## TABLE I

| | Examples | | | | | Comparative Examples[1] | | | |
|---|---|---|---|---|---|---|---|---|---|
| | 1 | 2 | 3 | 4 | 5 | C1 | C2 | C3 | C4 |
| Butadiene | 45 | 75 | 10 | 55 | 40 | 85 | 2 | 59 | 8 |
| Butyl acrylate | 15 | – | 75 | 5 | – | 10 | 70 | 1 | 85 |
| 2-ethylhexyl acrylate | – | 10 | – | – | 40 | – | – | – | – |
| Styrene | 38 | 11 | 13 | 38 | 20 | 3 | 26 | 37 | 3 |
| Acrylic acid | 2 | 4 | 2 | – | – | 2 | – | 3 | 4 |
| Itaconic acid | – | – | – | 2 | – | – | 2 | – | – |
| Tertiary dodecyl mercaptan | 1.8 | 2.5 | 3.0 | 2.5 | 2.5 | 3.0 | 3.5 | 2.5 | 3.5 |

(1) Not examples of the invention.

<div align="center">TABLE II</div>

| | Dry tack (X/32 inch) | Cohesive strength (sec.) | Adhesive strength (g/2.5 cm) | Water(2) resist-ance | Heat(2) resist-ance |
|---|---|---|---|---|---|
| Example | 7 (5.6 mm) | 3000 | 1200 | A | A |
| Example 2 | 9 (7.1 mm) | 450 | 800 | A | A |
| Example 3 | 8 (6.4 mm) | 400 | 1100 | B | A |
| Example 4 | 7 (5.6 mm) | 500 | 1000 | A | A |
| Example 5 | 8 (6.4 mm) | 1100 | 800 | A | A |
| Comparative 1(1) | 9 (7.1 mm) | 50 | 240 | A | C |
| Comparative 2(1) | 10 (7.9 mm) | 90 | 400 | C | A |
| Comparative 3(1) | 6 (4.8 mm) | 100 | 900 | A | ‘ B |
| Comparative 4(1) | 9 (7.1 mm) | 30 | 120 | C | A |

TABLE II (cont'd)

|  | Dry tack (X/32 inch) | Cohesive strength (sec.) | Adhesive strength (g/2.5cm) | Water(2) resist- ance | Heat(2) resist- ance |
|---|---|---|---|---|---|
| Commercially available acrylic latex type self- -adhesive No. 1(1) | 8 (6.4 mm) | 800 | 750 | C | A |
| Commerically available acrylic latex type self- -adhesive No. 2(1) | 7 (5.6 mm) | 250 | 1200 | C | A |
| Commercially available rubber- -in-solvent type self-adhesive(1) | 6 (4.8 mm) | 240 | 400 | A | A |

(1)  Not examples of the invention.

(2)  The symbols A, B and C represent the following evaluations, respectively:

        A .... Good

        B .... Slightly bad

        C .... Poor

0048950

WHAT IS CLAIMED IS:

1. A latex comprising
   (a) 5-80 percent of a conjugated diene; and
   (b) 3-80 percent of an alkyl ester of an ethylenically unsaturated carboxylic acid.

2. The latex of Claim 1 additionally comprising at least one other monomer which is copolymerizable with the diene and ester.

3. The latex of Claim 2 in which the other monomer is an ethylenically unsaturated carboxylic acid.

4. The latex of Claim 3 in which the acid is present at from about 0.5-7.0 percent.

5. A pressure-sensitive adhesive article comprising a substrate bearing a coating of the latex of Claim 1, 2, 3 or 4.

29,718-F

6.    A latex comprising

(a)    a conjugated diene; and

(b)    an alkyl ester of an ethylenically
unsaturated carboxylic acid;

the diene and ester being present in relative proportion
such that when the latex is thickened to about 10,000
cps (10 PaS) and coated onto a paper substrate at about
30 g/cm², the resulting composite has a shear adhesion
of at least about 250 seconds and a peel adhesion of at
least about 500 g/2.5 cm.

7.    The latex of Claim 6 additionally
comprising at least one other monomer which is
copolymerizable with the diene and ester.

8.    The latex of Claim 7 in which the other
monomer is an ethylenically unsaturated carboxylic
acid.

9.    The latex of Claim 8 wherein the acid is
present in proportion to the diene and ester such that
the acid substantially increases the colloidal stability,
shear adhesion or peel adhesion of a composite coated
with the latex.

10.   A pressure-sensitive/article comprising
a substrate bearing a coating of the latex of Claim 6,
7, 8 or 9.

| Category | Citation of document with indication, where appropriate, of relevant passages | Relevant to claim | CLASSIFICATION OF THE APPLICATION (Int. Cl.³) |
|---|---|---|---|
| X | <u>US - E - 27 269</u> (V.A MILLER)<br>* Claim 11; column 1, line 50 * | 1-10 | C 09 J 7/02<br>C 08 F 236/04<br>C 08 F 220/12<br>//(C 08 F 236/<br>04, 220/12)<br>(C 08 F 220/12,<br>236/04) |
| X | <u>US - A - 3 407 164</u> (G.F. SCHMIDT)<br>* Claim 5; example 2 * | 1-10 | |
| | <u>DE - A - 1 719 178</u> (DEUTSCHE TEXACO)<br>* Claim 1 * | 5,10 | |
| X | <u>GB - A - 998 773</u> (ICI)<br>* Claim 1 * | 1-4,6-9 | **TECHNICAL FIELDS SEARCHED (Int. Cl.³)**<br><br>C 08 F 236/04<br>220/12 |
| E | <u>EP - A - 0 022 967</u> (GAF CORP.)<br>* Claims 1 and 15; examples III and IV * | 1-10 | C 09 J 7/02<br>3/12 |

**DOCUMENTS CONSIDERED TO BE RELEVANT**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search<br>The Hague | Date of completion of the search<br>30-12-1981 | Examiner<br>VAN HUMBEECK | |

EPO Form 1503.1  06.78